# EUROPEAN PATENT SPECIFICATION

(11) **EP 2 810 593 B1**
(45) Date of publication and mention of the grant of the patent: **21.11.2018**
(21) Application number: 13175104.2
(22) Date of filing: 04.07.2013
(51) Int. Cl.: A47K 3/36, F16B 2/18, E06B 1/60, A47K 3/30

(54) **Door assembly**
Türanordnung
Ensemble de porte

(30) Priority: 03.06.2013 CN 201320314093 U
(43) Date of publication of application: 10.12.2014
(73) Proprietor: Foshan Ideal Co., Ltd., 528515 Guangdong (CN)
(72) Inventor: Wei, Wuxiang, 528515 Foshan (CN)
(74) Representative: AWA Sweden AB

(56) References cited:
- EP-A2- 2 382 905
- AU-A4- 2013 100 477
- GB-A- 2 291 676
- US-A- 3 093 220

## Description

### Cross-reference to Related Document

This application claims priority benefit from Chinese utility model application No. 201320314093.6 filed on June 3, 2013 in the name of Foshan Ideal Co., Ltd., the disclosure of which is incorporated herein by reference in its integrity.

### Field of the Invention

The present invention relates to a door assembly, especially to transversal adjustment of stationary frames in the door assembly.

### Background of the Invention

Doors, such as shower doors or balcony doors, generally comprise stationary frames mounted against wall surfaces and movable frames coupled with door panels, such as glass door panels. The stationary frames are normally provided with one or more through holes through which a fastener, such as a screw, passes and inserts into a drilled hole on the wall surface, so as to fix the stationary frame to the wall surface.

In this situation, the diameter of the fastener is always smaller than that of the through hole provided in the stationary frame so that when the stationary frame is mounted against the wall surface, it is still transversally movable so as to compensate errors that may be generated during mounting operation.

However, in one aspect, the drilling operation to generate the drilled hole on the wall surface requires at least two people to complete and is also time-consuming. In another aspect, the drilling operation is risky to cause damage to the frames which are usually made of aluminum materials.

Moreover, drilling operation causes permanent damage to the wall surface. When it is desired to change the door, the existence of the drilled hole significantly limits the scope of choice of different types of doors and adversely affect the mounting of new doors.

AU 2013 100 477 A4 discloses all the features of the preamble of claim 1.

### Summary of the Invention

An object is to provide a door assembly that can be mounted without drilling on wall and the stationary frame which is transversally movable.

To achieve the object, a door assembly is provided which comprises a stationary frame having a substrate side. The substrate side has at least one first through hole. The door assembly further comprises an adhesive element with one side adhered to the wall surface and a locking assembly. The locking assembly comprises a fixing element adhered to the other side of the adhesive element, having an anchoring portion, and a cam mechanism is located within the stationary frame, movable between a first position and a second position to lock with and release from the anchoring portion. The cam mechanism comprises a pin, an opening and pin holes. The anchoring portion has a shaft hole and is receivable in the opening. The pin passes through the pin holes and the shaft hole such that the anchoring portion is rotatably connected with the cam mechanism, and the anchoring portion has a base and a rod. The fixing element has a width W2 less than the width W1 of the substrate side and the rod of the anchoring portion has a width W4 less than the width W3 of the at least one first through hole. When the fixing element is adhered to the adhesive element, the stationary frame can be moved within the range of W1-W2 or W3-W4, which has smaller value.

In a preferable embodiment, the locking assembly further comprises a cushion having a second through hole through which the anchoring portion can pass such that the cushion is attached to the substrate side of the stationary frame. The cam mechanism is then directly acted on the cushion other than the substrate side.

In a preferable embodiment, the anchoring portion and the fixing element form into one piece. In another embodiment, the anchoring portion and the fixing element are independent pieces. In this situation, the fixing element has a counterbore hole and a third through hole. The base of the anchoring portion is receivable within the counterbore hole and the anchoring portion passes through the third through hole.

The door assembly provided by the present invention can be mounted without need of additional tools, such as an electric drill. Due to the differences between the widths of the substrate side and the fixing element and between the widths of the anchoring portion and the first through hole, the stationary frame is easy to be moved in the width direction, so as to compensate errors generated during mounting operation.

### Brief Description of Drawings

Fig. 1 shows the main parts to achieve transversal movement according to one example of the invention.
Fig. 2 shows the comparisons of dimensions among the stationary frame, fixing element and the first through hole.
Fig. 3 shows an exemplary locking assembly according to the present invention.
Fig. 4 shows another exemplary locking assembly according to the present invention.
Fig. 5 shows the adhesive element, the fixing element and the stationary frame in an assembly state.
Fig. 6 shows partial views of the cam mechanism when in locking position and opening position.
Fig. 7 shows the direction of movement of the stationary frame.

Elements that are irrelevant to the spirit of the invention are omitted from the drawings for the sake of clarity.

### Detailed Description of the Invention

The present invention will now be described in more detail in reference to the drawings. It should be noted that the terminology used herein is for the purpose of describing particular embodiments only and is not intended to be limiting of example embodiments of the invention. As used herein, the singular forms "a," "an," and "the," are intended to include the plural forms as well, unless the context clearly indicates otherwise. As used herein, the terms "and/or" include any and all combinations of one or more of the associated listed items. It will be further understood that the terms "comprises" "comprising" "includes" and/or "including" when used herein, specify the presence of stated features, integers, steps, operations, elements, and/or components, but do not preclude the presence or addition of one or more other features, integers, steps, operations, elements, components, and/or groups thereof.

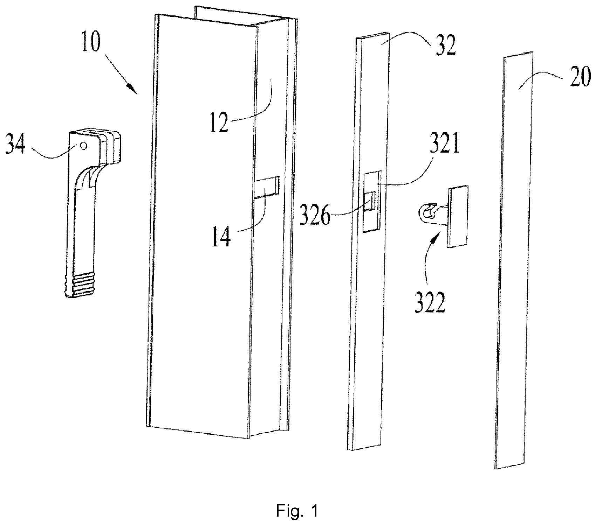

With reference to Fig. 1, a substantive part of a door assembly according to the present invention is shown. The door assembly comprises a stationary frame 10 to be attached to a wall surface. The stationary frame 10 has a substrate side 12 which is provided with a through hole 14. The door assembly further comprises a locking assembly 30 including a fixing element 32 having an anchoring portion 322. The locking assembly 30 further includes a cam mechanism 34 movable between a first position and a second position so as to lock with and release from the anchoring portion 322. The door assembly further comprises an adhesive element 20, normally in the form of an elongated sheet with one side adhered to the wall surface and the other side adhered to the fixing element 32 of the locking assembly 30.

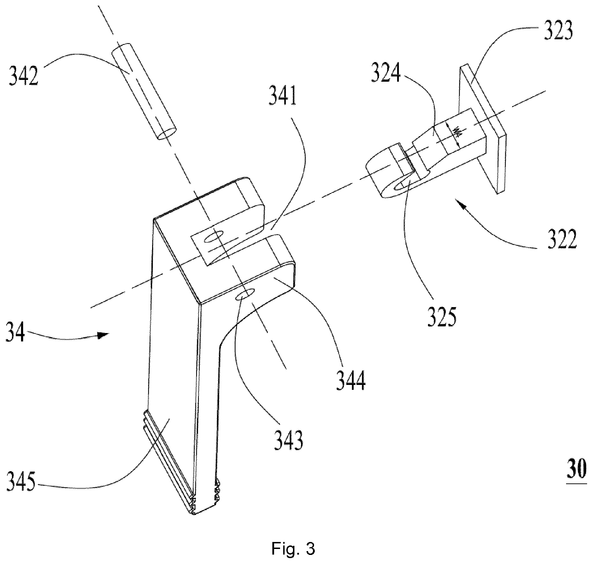

In the present example, the anchoring portion 322 is an independent piece. As shown in Fig. 3, the anchoring portion 322 has a base 323 and a rod 324 having a shaft hole 325. Correspondingly, the fixing element 32 has a counterbore hole 321 and a through hole 326 within the counter bore hole 321. The base 323 can be completely received within the counter bore hole 321 such that when the anchoring portion 322 is coupled to the fixing element 32, the surface of the fixing element 32 facing toward the adhesive element 20 is still smooth. When the anchoring portion 322 is coupled to the fixing element 32, the rod 324 passes through the through hole 326 and extends into the stationary frame 10. The rod 324 has a suitable length such that it can cooperate with the cam mechanism 34 to achieve the locking. The person skilled in the art can determine the length of the rod without creative work.

It can be contemplated that the anchoring portion 322 can form one piece with the fixing element 32, i.e., the base 323 is integrally formed with the fixing element 32 and the fixing element 32 has a rod 324.

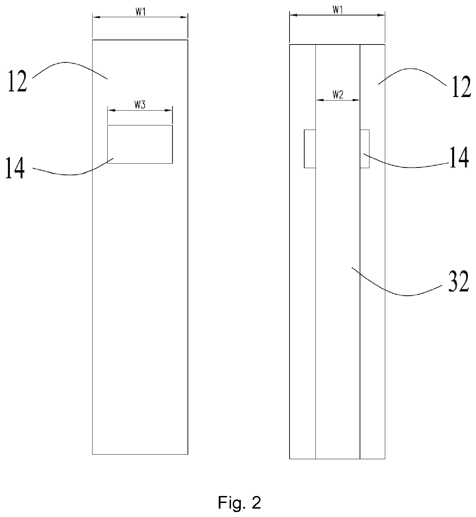

As shown in Fig. 2, to achieve transversal movement, in the present example, two requirements should be fulfilled. The first requirement is that the width W2 of the fixing element 32 is less than the width W1 of the substrate side 12. When the fixing element 32 is adhered to the adhesive element 20, the stationary frame 10 is possible to move transversally within the range of W1-W2. The second requirement is that the width W4 (see Fig. 3) of the rod 324 of the anchoring portion 322 is less than the width W3 of the through hole 14. Therefore, the rod 324 is movable within the through hole 14 along with the movement of the stationary frame 10, with an extent of movement within W3-W4. Therefore the stationary frame 10 can be moved within the range of W1-W2 or W3-W4, which has smaller value. Preferably, W1-W2 and W3-W4 have equal value. The skilled person in the art can easily determine the values of W1, W2, W3 and W4 with a purpose to achieve desired movement range.

As shown in Fig. 3, in the present example, the locking assembly 30 further comprises a cam mechanism 34 which is able to lock with and release from the anchoring portion 322. The cam mechanism 34, when in use, is located within the stationary frame 10 and comprises an opening 341, two sidewalls 344, pin holes 343 on the sidewalls and a pin 342. The opening 341 is provided for receiving the rod 324 and when the rod 324 is extended and received within the opening 341, the shaft hole 325 will align with the pin holes 343 such that the pin 342 can pass through the pin holes 343 and the shaft hole 325 to rotably connect the cam mechanism 34 to the anchoring portion 322, such that the stationary frame 10 and the fixing element 32 is connected.

The person skilled in the art can appreciate that the locking assembly 30 is provided to connect the stationary frame 10 and the fixing element 32 in a detachable manner, which can also be achieved in other ways known already in the art.

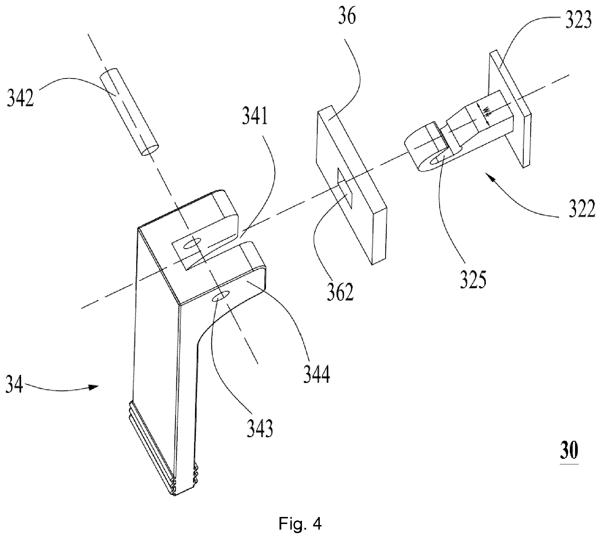

With reference to Fig. 4, a further example of the locking assembly 30 is shown. In the present example, the locking assembly 30 further comprises a cushion 36 having a through hole 362. When in use, the cushion 36 is located within the stationary frame 10 and the rod 324 passes in turn the through hole 326, through hole 14 and through hole 362 and extends into the stationary frame 10. Therefore, the cam mechanism 34 is acted upon the cushion 36 directly and through the cushion 36 upon the fixing element 32. The existence of cushion 36 avoids the direct contact of the cam mechanism 34 with the substrate side 12 and therefore provide buffering effect to the latter.

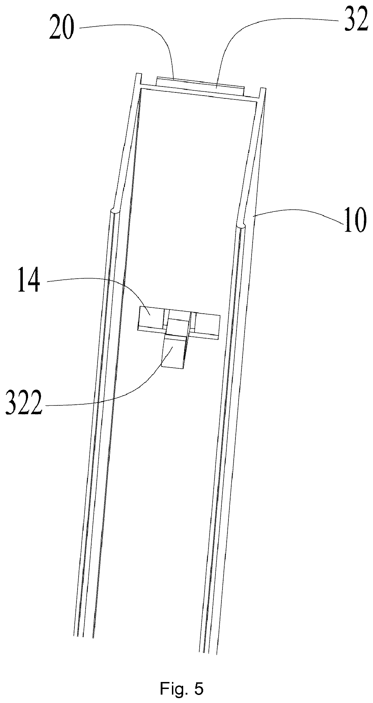

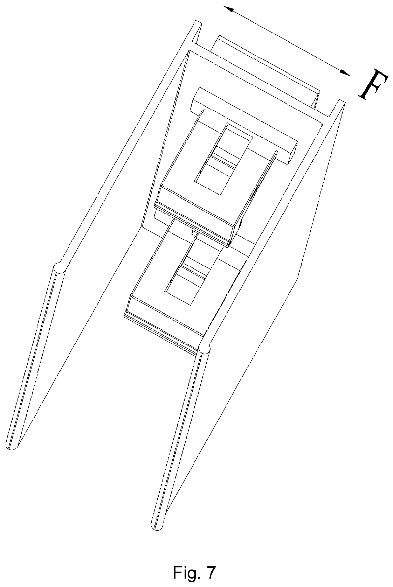

Fig. 5 shows the fixing element 32 having the anchoring portion 322, the adhesive element 20 and the stationary frame 10 in an assembly state. Fig. 7 shows that the fixing element 32 is movable in the range of the width of the substrate side 12 and the anchoring portion 322 is movable within the range of the width of the through hole 14.

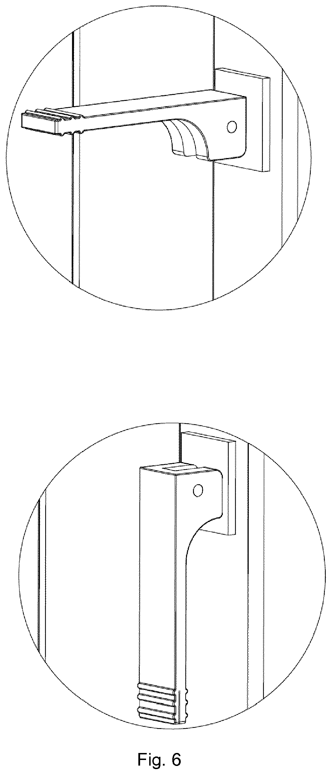

Fig. 6 shows the cam mechanism 34 in open position (top) and locking position (bottom) respectively. In open position, the cam mechanism 34 does not act against the substrate side 12 and / or the cushion 36, such that the fixing element 32 is transversally movable in relation to the stationary frame 10. When the cam mechanism is rotated by 90°, it is in locking position, in which the cam mechanism pulls the anchoring portion 322 due to eccentric action, enabling the fixing element 32 to closely contact the stationary frame 10 and the cushion 36 such that the fixing element 32 is not able to transversally move due to the friction forces there between.

It can be appreciated that, more than one locking assembly 30, such as two, can be included in the door assembly, located at top and bottom ends of the stationary frame 10 respectively.

It should be understood that various example embodiments have been described with reference to the accompanying drawings in which only some example embodiments are shown. The present invention, however, may be embodied in many alternate forms and should not be construed as limited to only the example embodiments set forth herein.

## Claims

1. A door assembly, comprising a stationary frame (10) having a substrate side (12), the substrate side (12) having at least one first through hole (14), the door assembly further comprises a locking assembly (30), the locking assembly (30) comprises a fixing element (32) and an anchoring portion (322) mounted on the fixing element (32), and a cam mechanism (34) is located within the stationary frame (10), movable between a first position and a second position to lock with and release from the anchoring portion (322), and the cam mechanism (34) comprises a pin (342), an opening (341) and pin holes (343), the anchoring portion (322) having a shaft hole (325) and being received in the opening (341), the pin (342) passing through the pin holes (343) and the shaft hole (325) such that the cam mechanism (34) is rotatably connected with the anchoring portion (322),
**characterised in that**,
the door assembly further comprises an adhesive element (20) with one side adhered to the wall surface, the fixing element (32) of the locking assembly (30) adhered to the other side of the adhesive element (20), and that the anchoring portion (322) having a base (323) and a rod (324), wherein the width W2 of the fixing element (32) is less than the width W1 of the substrate side (12) and the width W4 of the rod (324) of the anchoring portion (322) is less than the width W3 of the through hole (14), when the fixing element (32) is adhered to the adhesive element (20), the stationary frame (10) can be moved within the range of W1-W2 or W3-W4, which has smaller value.

2. The door assembly of claim 1, wherein the locking assembly (30) further comprises a cushion (36) having a second through hole (362) through which the anchoring portion (322) passes such that the cushion (36) is attached to the substrate side (12) of the stationary frame (10).

3. The door assembly of claim 1, wherein the anchoring portion (322) and the fixing element (32) form into one piece.

4. The door assembly of claim 2, wherein the anchoring portion (322) and the fixing element (32) are independent pieces, and the fixing element (32) having a counterbore hole (321) and a third through hole (326), the base (323) of the anchoring portion (322) being received within the counterbore hole (321) and the anchoring portion (322) passing through the third through hole (326).

5. The door assembly of claim 1, wherein the fixing element (32) and the adhesive element (20) are in the form of elongated sheet.

6. The door assembly of claim 1, wherein the door assembly comprises two locking assemblies (30) located at top and bottom ends of the stationary frame (10) respectively.

7. The door assembly of claim 1, wherein the door assembly is shower door assembly or balcony door assembly.

## Patentansprüche

1. Türbaugruppe, umfassend einen feststehenden Rahmen (10), der eine Substratseite (12) aufweist, wobei die Substratseite (12) mindestens ein erstes Durchgangsloch (14) aufweist, wobei die Türbaugruppe ferner eine Verriegelungsbaugruppe (30) umfasst, wobei die Verriegelungsbaugruppe (30) ein Befestigungselement (32) und einen Verankerungsabschnitt (322), der an dem Befestigungselement (32) montiert ist, und ein Kurvengetriebe, das sich im Innern des feststehenden Rahmens (10) befindet und zwischen einer ersten Position und einer zweiten Position bewegbar ist, um mit dem Verankerungsabschnitt (322) verriegelt zu werden und von dem Verankerungsabschnitt (322) gelöst zu werden, umfasst, und das Kurvengetriebe (34) einen Stift (342), eine Öffnung (341) und Stiftlöcher (343) umfasst, wobei der Verankerungsabschnitt (322) ein Wellenloch (325) aufweist und in der Öffnung (341) aufgenommen wird, wobei der Stift (342) durch die Stiftlöcher (343) und das Wellenloch (325) hindurch geht, so dass das Kurvengetriebe (34) mit dem Verankerungsabschnitt (322) drehbar verbunden ist,
**dadurch gekennzeichnet, dass**
die Türbaugruppe ferner ein Klebelement (20) umfasst, wobei eine Seite an der Wandoberfläche klebt, wobei das Befestigungselement (32) der Verriegelungsbaugruppe (30) an der anderen Seite des Klebelements (20) klebt, und dass der Verankerungsabschnitt (322) eine Basis (323) und einen Stab (324) aufweist, wobei die Breite W2 des Befestigungselements (32) kleiner als die Breite W1 der Substratseite (12) ist und die Breite W4 des Stabs (324) des Verankerungsabschnitts (322) kleiner als die Breite W3 des Durchgangslochs (14) ist, wenn das Befestigungselement (32) an dem Klebelement (20) klebt, wobei der feststehende Rahmen (10) innerhalb des Bereichs von W1 bis W2 oder W3 bis W4, der einen kleineren Wert aufweist, bewegt werden kann.

2. Türbaugruppe nach Anspruch 1, wobei die Verriegelungsbaugruppe (30) ferner eine Auflage (36) umfasst, die ein zweites Durchgangsloch (362) aufweist, durch das der Verankerungsabschnitt (322) derart geht, dass die Auflage an der Substratseite (12) des feststehenden Rahmens (10) angebracht ist.

3. Türbaugruppe nach Anspruch 1, wobei der Verankerungsabschnitt (322) und das Befestigungselement (32) einstückig sind.

4. Türbaugruppe nach Anspruch 2, wobei der Verankerungsabschnitt (322) und das Befestigungselement (32) unabhängige Teile sind, und das Befestigungselement (32) eine Schulterbohrung (321) und eine drittes Durchgangsloch (326) aufweist, wobei die Basis (323) des Verankerungsabschnitts (322) in der Schulterbohrung (321) aufgenommen ist und der Verankerungsabschnitt (322) durch das dritte Durchgangsloch (326) geht.

5. Türbaugruppe nach Anspruch 1, wobei das Befestigungselement (32) und das Klebelement (20) in Form eines länglichen Blechs vorliegen.

6. Türbaugruppe nach Anspruch 1, wobei die Türbaugruppe zwei Verriegelungsbaugruppen (30) umfasst, die sich jeweils an den oberen und unteren Enden des feststehenden Rahmens (10) befinden.

7. Türbaugruppe nach Anspruch 1, wobei die Türbaugruppe eine Duschtürbaugruppe oder eine Balkontürbaugruppe ist.

## Revendications

1. Ensemble de porte, comprenant un cadre stationnaire (10) comportant un côté de substrat (12), le côté de substrat (12) ayant au moins un premier trou perforant (14), l'ensemble de porte comprend en outre un ensemble de verrouillage (30), l'ensemble de verrouillage (30) comprend un élément d'attache (32) et une partie d'ancrage (322) montée sur l'élément d'attache (32), et un mécanisme de came (34) est situé à l'intérieur du cadre stationnaire (10), mobile entre une première position et une seconde position afin de se verrouiller avec la partie d'ancrage (322) et de se libérer de la partie d'ancrage (322), et le mécanisme de came (34) comprend une broche (342), une ouverture (341) et des trous de broche (343), la partie d'ancrage (322) comprenant un trou d'arbre (325) et étant reçue dans l'ouverture (341), la broche (342) passant à travers les trous de broche (343) et le trou d'arbre (325) de sorte que le mécanisme de came (34) est relié de manière rotative à la partie d'ancrage (322), **caractérisé en ce que**, l'ensemble de porte comprend en outre un élément adhésif (20) comprenant un côté qui adhère à la surface de la paroi, l'élément d'attache (32) de l'ensemble de verrouillage (30) adhère à l'autre côté de l'élément adhésif (20), et **en ce que** la partie d'ancrage (322) ayant une base (323) et une tige (324), dans lequel la largeur W2 de l'élément d'attache (32) est inférieure à la largeur W1 du côté de substrat (12) et la largeur W4 de la tige (324) de la partie d'ancrage (322) est inférieure à la largeur W3 du trou perforant (14), lorsque l'élément d'attache (32) adhère à l'élément adhésif (20), le cadre stationnaire (10) peut être déplacé dans la plage de W1-W2 ou W3-W4, qui présente une valeur plus petite.

2. Ensemble de porte selon la revendication 1, dans lequel l'ensemble de verrouillage (30) comprend en outre un coussinet (36) comportant un second trou perforant (362) à travers lequel passe la partie ancrage (322) de sorte que le coussinet (36) soit attaché aux côtés de substrat (12) du cadre stationnaire (10).

3. Ensemble de porte selon la revendication 1, dans lequel la partie ancrage (322) et l'élément d'attache (32) se forment dans une seule pièce.

4. Ensemble de porte selon la revendication 2, dans lequel la partie d'ancrage (322) et l'élément d'attache (32) sont des pièces indépendantes, et l'élément d'attache (32) comportant un trou contre-percé (321) et un troisième trou perforant (326), la base (323) de la partie d'ancrage (322) étant reçue à l'intérieur du trou contre-percé (321) et la partie d'ancrage (322) passant à travers le troisième trou perforant (326).

5. Ensemble de porte selon la revendication 1, dans lequel l'élément d'attache (32) élément adhésif (20) sont de la forme d'un feuillet allongé.

6. Ensemble de porte selon la revendication 1, dans lequel l'ensemble de porte comprend deux ensembles de verrouillage (30) situés aux extrémités supérieure et inférieure du cadre stationnaire (10) respectivement.

7. Ensemble de porte selon la revendication 1, dans lequel l'ensemble de porte et un ensemble de porte de douche ou un ensemble de porte de balcon.
